# EUROPEAN PATENT APPLICATION

(11) **EP 3 435 298 A1**
(43) Date of publication of application: **30.01.2019**
(21) Application number: 18185274.0
(22) Date of filing: 24.07.2018
(51) Int. Cl.: G06Q 10/04, G06Q 50/30

(54) **COMPUTER IMPLEMENTED TECHNOLOGIES CONFIGURED TO ENABLE EFFICIENT PROCESSING OF DATA IN A TRANSPORTATION NETWORK BASED ON GENERATION OF DIRECTED GRAPH DATA DERIVED FROM TRANSPORTATION TIMETABLE DATA**

(30) Priority: 24.07.2017 AU 2017902894; 31.07.2017 AU 2017903010
(71) Applicant: SilverRail Australia Pty Ltd, 4000 Brisbane, Queensland (AU)
(72) Inventor: POTTONEN, Olli, Queenscliff 2096 (AU)
(74) Representative: Smith, Jeremy Robert

(57) **Abstract**

The present invention relates to computer implemented technologies configured to enable efficient processing of queries in a transportation data system, for example by pre-processing data thereby generate a directed graph that enables efficient data analysis (for example in the context of computing optimal journeys). This is achieved by configuring a computer system to implement what is described herein as a graph data generation process, and solves technical problems associated with reducing query processing times.

## Description

### FIELD OF THE INVENTION

The present invention relates to computer implemented technologies configured to enable efficient processing of data in a transportation network, based on generation of directed graph derived from transportation timetable data. Embodiments of the invention have been particularly developed to enable pre-processing of data concerning trips in a transportation network, thereby to enable increased processing speed and efficiency when solving of data queries such as minimum estimated arrival time problems and analysis of multiple alternate journey routes. While some embodiments will be described herein with particular reference to that application, it will be appreciated that invention is not limited to such a field of use, and is applicable in broader contexts.

### BACKGROUND

Any discussion of the background art throughout the specification should in no way be considered as an admission that such art is widely known or forms part of common general knowledge in the field.

In a transportation network, there are often a significant number of options by which a traveller can travel from a given Point A to a given Point B. The number of options can increase significantly based on factors such as the complexity of available transportation networks, and willingness to move between and/or across established routes.

Various computer processes and algorithms have been developed to handle queries of travel options in transportation networks. A core objective of such processes and algorithms is to provide efficiency in query handling, which is of great importance given: (i) the degree of query traffic experienced by transportation ticketing/planning systems; and (ii) and user expectations to receive a prompt query response.

Directed graphs have been proposed as a means to provide efficiency, by facilitating pre-processing of transportation data. For example, one known approach is to use Dijkstra's algorithm on time-expanded networks.

### SUMMARY OF THE INVENTION

It is an object of at least some embodiments of the present invention to overcome or ameliorate at least one of the disadvantages of the prior art, or to provide a useful alternative.

One embodiment provides a computer system configured to enable efficient processing of queries received from a user, the computer system including:
an input module configured to receive transportation data, the transportation data including:
   data representative of a plurality of locations in a transportation network; and
   data representative of a plurality of trips in the transportation network, for each trip the data is representative of:
      (i) a subset of the plurality of locations;
      (ii) for each location in the subset, either or both of an arrival time and a departure time;
an event generation module that is configured to process the received transportation data thereby to define a set of events, wherein the set of events includes:
   (i) a plurality of arrival events, each associated with a location and event time; and
   (ii) a plurality of departure events, each associated with a location and event time; and;
a graph data generation module that is configured execute an event-based graph generation process in respect of the set of events defined by the event generation module thereby to generate event graph data; and
an output module configured to output the event graph data for analysis, thereby to enable efficient analysis of multiple point-to-point journeys for a given origin and destination within the transportation network.

In some embodiments, the graph generation process provides pre-processing that is used by an event scanning process, the event scanning process being configured to, via an iterative process that executes over all events in a given time window, in topological order, thereby to enable identification of journeys. This is discussed in more detail further below.

One embodiment provides a computer system wherein the event-based graph generation process includes, in respect of events defined via the event generation module, performing:
(i) an in-trip arc generation process;
(ii) a stop-by-stop arc generation process; and
(iii) a departure-arrival arc generation process.

One embodiment provides a computer system wherein the in-trip arc generation process includes, for each trip:
Identifying, in the set of events defined by the event generation module, a set of in-trip events associated with that trip;
for each departure event in the identified set of in-trip events, identifying a next-in-time arrival event, and defining an arc between that departure event and the identified next-in-time arrival event, wherein the arc is a directional arc with a direction from the departure event to the identified next-in-time arrival event; and
for each departure event in the identified set of in-trip events, identifying a next-in-time departure event, and defining an arc between that departure event and the identified next-in-time departure event, wherein the arc is a directional arc with a direction from the departure event to the identified next-in-time departure event.

One embodiment provides a computer system wherein the stop-by-stop arc generation process includes:
for each location in the plurality of locations, identifying, in the set of events defined by the event generation module, all arrival events associated with the location;
for each location in the plurality of locations, in respect of each of the identified arrival events associated with the location, identifying a next-in-time arrival event associated with the location, and defining an arc between the arrival event and the identified next-in-time arrival event.

One embodiment provides a computer system wherein the departure-arrival arc generation process includes:
for each location in the plurality of locations, identifying, in the set of events defined by the event generation module, all arrival events and departure events associated with the location;
for each location in the plurality of locations, in respect of each of the identified departure events associated with the location, identifying a most-recent-in-time arrival event, and defining an arc between the departure event and the identified most-recent-in-time arrival event.

One embodiment provides a computer system wherein identifying a most-recent-in-time arrival event associated with the location includes applying predefined wait time constraints.

One embodiment provides a computer system wherein the graph data generation process additionally includes a walk-based arc generation process, wherein the walk-based arc generation process includes:
for each location in the plurality of locations, identifying none or more further locations for which data representative of a walking connection is defined; and
for each location in the plurality of locations for which one or more further locations for which data representative of a walking connection is defined, identifying, in the set of events defined by the event generation module associated with the location, all departure events;
for each identified departure event, identifying a most-recent-in-time arrival event at the or each further location beyond a predefined walk time period defined for a combination of the location and the further location, and defining an arc between the arrival event and the identified most-recent-in-time arrival event beyond the predefined walk time period.

The walk based arcs are directed arcs, as are other arcs described further above.

One embodiment provides a computer system including a graph generation coordination module that is configured to control the input module, event generation module, graph data generation module and output module thereby to cause generation and outputting of updated graph data in response to predefined stimuli.

One embodiment provides a computer system wherein the predefined stimuli includes: elapsing of a predetermined time period, a time-based trigger, and input representative of a change in the transportation data

One embodiment provides a computer system including an event scanning module that is configured to analyse the event graph data in response to a received query.

One embodiment provides a computer system wherein the event scanning module is configured to:
(i) receive a journey query including data defining an origin location, a destination location, and a time window;
(ii) execute a process thereby to identify all events inside the time window that are departure events from the origin location, and:
   (a) assign to each identified a label defined by the departure time and a change count of zero; and
   (b) assign to all other event the a lowest-dominance label;
(iii) executing an iterative process over all events in the time window in topological order thereby to, for each given event:
   (a) identify a current label for the given event
   (b) identify labels of all other events from which there is an arc to the given event;
   (c) select a best label based on a set of the domination rules;
   (d) in the case that a selected label is from an arc defined by the departure-arrival arc generation process or the walk-based arc generation process, increasing the change count by one;
   (e) assigning the label to the given event;
(iv) processing labels of all arrival events at the destination based on domination rules thereby to discard dominated journeys, and retain non-dominated journeys.

One embodiment provides a computer system including, for the non-dominated journeys, performing a back-tracking process via the directed graph thereby to identify full details of that journey.

One embodiment provides a computer system wherein the domination rules are configured such that:
- a journey J₁ dominates a journey J₂ in the case that:
   (i) J₁ departs the origin location simultaneously to or later than J₂; and
   (ii) J₁ arrives at the destination location simultaneously or earlier than J₂; and
- if J₁ and J₂ both arrive and depart simultaneously, J₁ dominates J₂ only if it has same or smaller change count than J₂.

A computer implemented method configured to enable efficient processing of queries received from a user, the computer system including:
receiving transportation data, the transportation data including:
   data representative of a plurality of locations in a transportation network; and
   data representative of a plurality of trips in the transportation network, for each trip the data is representative of:
      (i) a subset of the plurality of locations;
      (ii) for each location in the subset, either or both of an arrival time and a departure time;
processing the received transportation data thereby to define a set of events, wherein the set of events includes:
   (i) a plurality of arrival events, each associated with a location and event time; and
   (ii) a plurality of departure events, each associated with a location and event time; and;
executing a graph data generation process in respect of the set of events defined by the event generation module thereby to generate event graph data; and
outputting the event graph data for analysis, thereby to enable efficient analysis of multiple point-to-point journeys for a given origin and destination within the transportation network.

A system configured to process a journey query in respect of a set of transportation data defined by a set of events defined in a directed graph, wherein the set of events includes:
(i) a plurality of arrival events, each associated with a location and event time; and
(ii) a plurality of departure events, each associated with a location and event time; and;
wherein the directed graph includes arcs between events defined based on a defined schema, including one or more arcs representative of transportation changes;
the system including an event scanning module is configured to:
(i) receive a journey query including data defining an origin location, a destination location, and a time window;
(ii) execute a process thereby to identify all events inside the time window that are departure events from the origin location, and:
   (a) assign to each identified a label defined by the departure time and a change count of zero; and
   (b) assign to all other event the a lowest-dominance label;
(iii) executing an iterative process over all events in the time window in topological order thereby to, for each given event:
   (a) identify a current label for the given event
   (b) identify labels of all other events from which there is an arc to the given event;
   (c) select a best label based on a set of the domination rules;
   (d) in the case that a selected label is from an arc representative of a transportation change, increasing the change count by one;
   (e) assigning the label to the given event;
(iv) processing labels of all arrival events at the destination based on domination rules thereby to discard dominated journeys, and retain non-dominated journeys.

One embodiment provides a computer program product for performing a method as described herein.

One embodiment provides a non-transitive carrier medium for carrying computer executable code that, when executed on a processor, causes the processor to perform a method as described herein.

One embodiment provides a system configured for performing a method as described herein.

Reference throughout this specification to "one embodiment", "some embodiments" or "an embodiment" means that a particular feature, structure or characteristic described in connection with the embodiment is included in at least one embodiment of the present invention. Thus, appearances of the phrases "in one embodiment", "in some embodiments" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

As used herein, unless otherwise specified the use of the ordinal adjectives "first", "second", "third", etc., to describe a common object, merely indicate that different instances of like objects are being referred to, and are not intended to imply that the objects so described must be in a given sequence, either temporally, spatially, in ranking, or in any other manner.

In the claims below and the description herein, any one of the terms comprising, comprised of or which comprises is an open term that means including at least the elements/features that follow, but not excluding others. Thus, the term comprising, when used in the claims, should not be interpreted as being limitative to the means or elements or steps listed thereafter. For example, the scope of the expression a device comprising A and B should not be limited to devices consisting only of elements A and B. Any one of the terms including or which includes or that includes as used herein is also an open term that also means including at least the elements/features that follow the term, but not excluding others. Thus, including is synonymous with and means comprising.

As used herein, the term "exemplary" is used in the sense of providing examples, as opposed to indicating quality. That is, an "exemplary embodiment" is an embodiment provided as an example, as opposed to necessarily being an embodiment of exemplary quality.

### BRIEF DESCRIPTION OF THE DRAWINGS

Embodiments of the invention will now be described, by way of example only, with reference to the accompanying drawings in which:
FIG. 1 schematically illustrates a framework according to one embodiment.
FIG. 2 illustrates a method according to one embodiment.
FIG. 3A to FIG. 3F provide graphical context to directed graph generation processes.
FIG. 4 illustrates a method according to one embodiment.

### DETAILED DESCRIPTION

In a transportation network, there are often a significant number of options by which a traveller can travel from a given Point A to a given Point B. The number of options can increase significantly based on factors such as the complexity of available transportation networks, and willingness to move between and/or across established routes. However, with the degree of query traffic experienced by transportation ticketing/planning systems (and user expectations), there are limits on the complexity of analysis that is able to be performed (for example based on acceptable query response times). The present invention relates to computer implemented technologies configured to enable efficient processing of queries in a transportation data system, for example by pre-processing data thereby generate a directed graph that enables efficient data analysis (for example in the context of computing optimal journeys). This is achieved by configuring a computer system to implement what is described herein as a graph data generation process, and solves technical problems associated with reducing query processing times.

### Example Framework

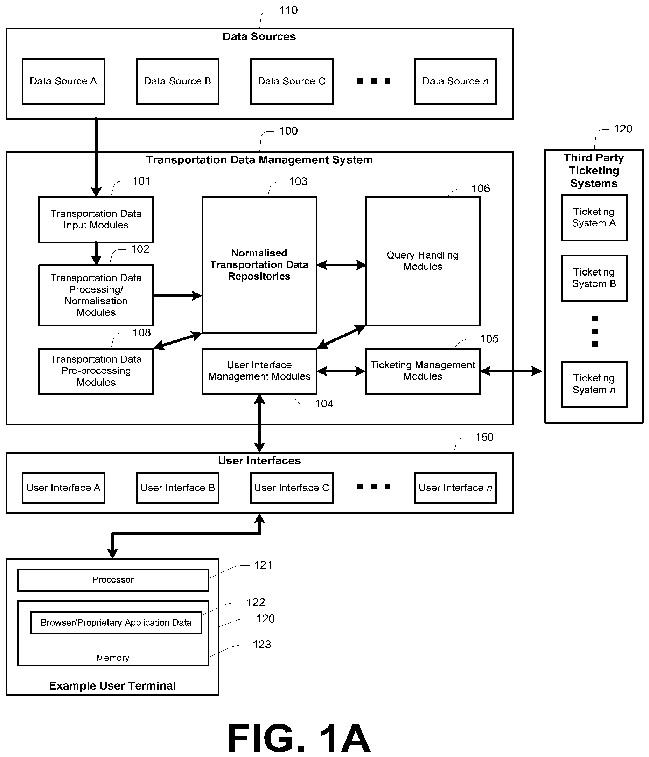

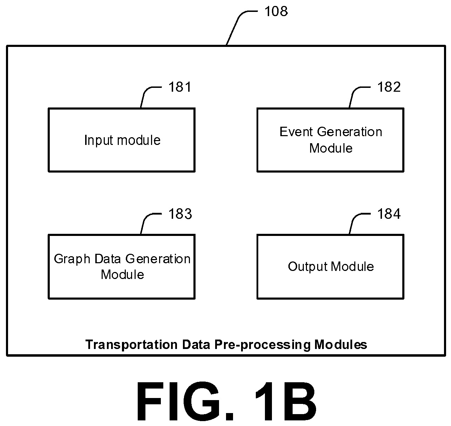

FIG. 1 illustrates an example framework according to an embodiment. This framework is provided as an example only, thereby to provide reference to technologies and methodologies described herein. It should be appreciated that the technologies and methodologies described herein are able to be implemented via the framework of FIG. 1, or via a range of alternate frameworks (as will be known to persons skilled in the art). In that regard, the framework of FIG. 1 seeks to illustrate key functional components that are relevant to provision of technology described herein.

FIG. 1 illustrates a transportation data management system 100. This system is defined by a single server device, or by multiple (optionally distributed) computing devices which collectively provide the functionality of system 100. For example, in one implementation, system 100 is defined by a networked computer system including web servers, database systems, processing hubs, and so on.

System 100 includes transportation data input modules 101, which are configured to enable input of data from a plurality of data sources 110. This may include pulling data from one or more of sources 110, and/or receiving push data delivered by one or more of sources 110. Modules 101 are configured based on the particular data source (or sources) with which they communicate. FIG. 1 illustrates example data sources Data Source A to Data Source n. These data sources may provide data including, but not limited to, the following:
- One or more sources of transportation scheduling data, for example data defined in accordance with General Transit Feed Specification (GTFS). Alternate data formats may also be used, for example TransXChange and the like. Regardless of the data format, transportation scheduling data provides, in a known format, data concerning scheduled trips (for example with transit locations, times, and so on).
- One or more sources of transportation fares data. For example, this provides data representative of monetary fares for travel between a given origin and destination, optionally associated with particular trip routes, times/dates, and so on.
- One or more sources of transportation fare availability data, which is for example representative of the availability of a fare for a defined trip between an origin and destination at a specified time/date.
- One or more sources of transportation rules data, for example data representative of rules associated with given fares (for instance whether they allow for over ticketing and so on).

It will be appreciated that in some cases a single data source provided multiple forms of data (for example where scheduling and fares data is provided via GTFS).

Transportation data processing/normalisation modules 102 are configured to process data received via input modules 101, thereby to enable storage of transportation data in a normalised format in one or more normalised transportation data repositories 103. For example, this may include combining of defined date from multiple linked CSV files defined based on GTFS into a flattened structure that is configured to enable efficient querying (for example based on known forms of queries, such as pre-processing queries, that are to be performed). In some embodiments the processing/normalisation performed by modules 102 generates multiple data repositories/tables which contain similar data structured based on differing data formats (for example based on data requirements for specific pre-processing queries), thereby to increase efficiency.

Transportation data pre-processing modules 108 are configured to execute computer data processing functions in respect of data in repositories 103, thereby to enhance that data in a manner that allows for increased efficiency in downstream query processing. For example, pre-processing is performed thereby to limit problem size for a known category of user query, for example a query based upon an origin and destination, thereby to reduce a set of trips of high relevance to that query (and exclude data that is known not to be useful in terms of providing relevant query results). In examples further below, an event generation module 182 and graph data generation module 183 are used.

User interface management module 104 enable interaction between system 100 and a plurality of user interfaces 150 which execute wholly or partially at client terminals, for example an example user terminal 120. By way of example, user terminal 120 is a computing device including a microprocessor 121 that is configured to execute computer executable code 122 (software instructions) maintained on a memory module, thereby to allow rendering and execution of a user interface on a display device of the terminal. In the provided example, code 122 includes either or both of: (i) web browser code, which allows user interface data to be downloaded from a web server for execution via a web browser app, and/or proprietary application code, in which case code for enabling execution and rendering of user interface components is maintained locally in memory 123.

User interface management modules 104 are configured to enable receipt of data representative of a query submitted by a user of a user interface, and cause that query to be executed via query handling modules 106. Query handling modules 106 are configured to enable execution of one or more queries against repositories 103. Example techniques for query processing are discussed further below. For example, in one embodiment described below a graph generation process is performed via pre-processing, which allows an event scanning process to be performed efficiently at query run time thereby to identify journeys (for example a shortest journey).

In the example of FIG. 1, user interface management modules also provide users with access to third party ticketing systems 120 via ticketing management modules, thereby enabling a user to (for instance) identify one or more desired trips via a reviewing results of query executed by modules 106 in respect of repositories 103, and cause execution of a process whereby modules 105 engage in data exchange with a relevant one or more of ticketing systems 120 thereby to obtain tickets. However, in some example frameworks ticketing management modules 105 are omitted, and system 100 is limited in functionality to providing journey planning information via user interfaces 150, and users engage in a separate ticket procurement process via ticketing systems 120 (external of involvement via system 100).

At a high level, a common overall process flow for a system such as system 100 is as follows:
- Transportation data, such as GTFS data, is obtained and normalised/processed into local data stores in accordance with a predefined protocol.
- Local data is optionally subjected to pre-processing, thereby to improve searchability of local data based on predefined forms of searches.
- Query data is received from a given user terminal via a user interface rendered at that terminal, and the query is executed against local data.
- Query results are returned to the user.
- For each of the query results, one or more scheduled trips are able to be identified in the transportation data.
- The user is enabled to view details for (and in some embodiments procure tickets in respect of) one or more of the identified scheduled trips.

Examples of more specific relevance to inventive technology described herein are provided further below.

### Graph Data Generation Process

Described herein is technology configured to perform pre-processing of a transportation network having scheduled transportation events (for example a rail network, bus network, hybrid network, or the like). For example, in one embodiment a computer system is configured to perform periodic/triggered pre-processing actions in respect of input data, thereby to make available transportation network graph data that is subsequently able to allow efficient solving of computational problems across the network (for example computing "best" journeys, such as where "best" is defined based on earliest arrival).

In general terms, a graph data generation process transforms transportation data (for example GTFS data) into event data, and processes that event data based on a defined set of processing rules thereby to define a directed graph. This includes defining arrival and departure events for locations in the network, these being derived from data representative of scheduled trips. The arrival and departure events are then linked via arcs in a particularly efficient manner, thereby to define a graph that represents all possible routes through the network from an origin Oᵢ to a destination Dᵢ across a time period that is covered by the inputted transportation data.

The technology is described by reference to software functionalities (i.e. functions realized by the execution of computer executable code via one or more computer processors) that form part of Transportation Data Pre-Processing Modules of FIG. 1A. It will be appreciated, however, that these functionalities may be provided in whole or in part by other components of the system of FIG. 1A, and/or by other computer systems.

An input module 181 configured to receive transportation data, the transportation data including:
- Data representative of a plurality of locations in a transportation network.
- Data representative of a plurality of trips in the transportation network, for each trip the data is representative of: (i) a subset of the plurality of locations; and (ii) for each location in the subset, either or both of an arrival time and a departure time.

For example, this may include (or be derived from) GTFS data and/or other forms of transportation data. In the present embodiment this data may be provided locally in repositories 103, in which it has been received from external sources and normalised.

An event generation module 182 is configured to process the received transportation data thereby to define a set of events, wherein the set of events includes:
(i) a plurality of arrival events, each associated with a location and event time; and
(ii) a plurality of departure events, each associated with a location and event time.

By way of example, the events may be defined in a data table of the following form:

### Event ID; Event Type; Event Location; Event Time; Trip ID

Where "Event ID" is a unique identifier for the event, "Event Type" is ether "Arrival" or "Departure", "Event Location" defines the location at which the event occurs (this may be, for example, a train station or a location, such as a specific embarkation/disembarkation platform, within a train station), "Event Time" is a time at which the event occurs (for example defined by a date and 24 hour time), and "Trip ID" is an identifier for a scheduled trip in the input data from which the event is defined (by this, each event remains connected to a specific trip on a specific date; this is used to subsequently identify, for example, trips form which an optimal journey is constructed).

It will be appreciated that the precise nature and data format for events varies between embodiments (for example incorporating additional complexities such as conditions, fare rules, and so on). The above selection is intended to represent a practical yet minimalist approach.

Event generation module 182 is configured to generate an updated set of event data in response to predefined stimuli. This may include regular/periodic updating, and/or updating in response to identification of changes in the input data (for example where transportation data is updated regularly and/or in real-time thereby to reflect changes such as delays).

In the present embodiment, repositories 103 additionally include pre-processed transfer times which represent predefined times required to move between platforms or the like at a given location. Additionally, the described embodiment implements an additional step of defining inter-location "walks", which are timed elements that define an ability to walk between defined locations (for example where two train stations are nearby one another). This, as will be appreciated from disclosure below, allows for richer understanding of the transportation network by in effect applying a more practical understanding of locations and opportunities to move between locations without scheduled transportation.

A graph data generation module 183 is configured execute a graph data generation process in respect of the set of events defined by the event generation module thereby to generate event graph data. This process is described in more detail below. Then, an output module 104 is configured to output the event graph data for analysis, thereby to enable efficient analysis of multiple point-to-point journeys for a given origin and destination within the transportation network.

In overview, the graph data generation process includes:
(i) An in-trip arc generation process. This is used to make connections between events within each defined trip, as discussed in more detail below. A key aspect is that each departure is connected to a subsequent in-trip departure (representing in practice remaining on a trip), and to an arrival (representing, in practice, leaving a trip for example to join another trip).
(ii) A stop-by-stop arc generation process. This is used to connect arrivals at each location.
(iii) A departure-arrival arc generation process. This is used to in essence work backwards through a network thereby to connect between departures and most-recent preceding arrivals.
(iv) A walk-based arc generation process (which is not present in all embodiments). This is used to enhance the graph where inter-location walking options are defined.

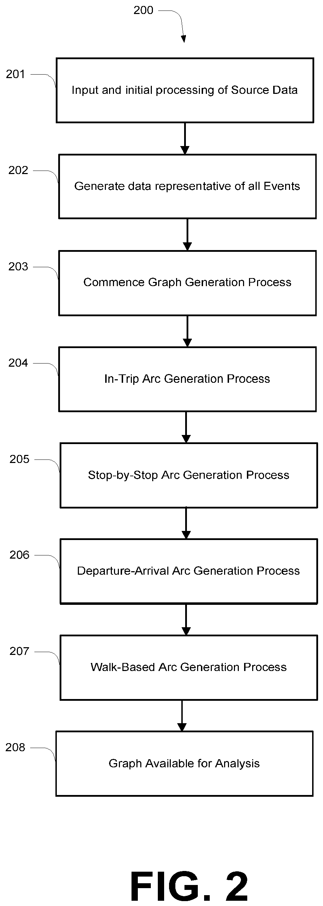

FIG. 2 illustrates a method 200 according to one embodiment. This method comprises:
- Input and initial processing of transportation data at 201;
- Generation of event data at 202;
- Commencing of graph generation at 203;
- In-trip arc generation at 204;
- Stop-by-stop arc generation at 205;
- Departure-arrival arc generation at 206;
- Walk-based arc generation at 207; and
- Graph data output at 208.

It will be appreciated that various steps are, in other embodiments, performed in parallel and/or in alternate orders.

In a preferred embodiment, the in-trip arc generation process is performed as follows. The in-trip arc generation process is performed for all defined trips. For each given trip, the process includes identifying, in the set of events defined by the event generation module a set of in-trip events associated with that trip (including both arrival events and departure events). For each departure event in that identified set of in-trip events, the process includes identifying a next-in-time arrival event (for example via ordering of all events with a common Trip ID in a chronological manner). An arc is defined between each given departure event and the identified next-in-time arrival event. This is intended to represent a transportation route that leaves one location, and is followed by disembarkation at a next location. Additionally, the process includes, for each departure event in the identified set of in-trip events, identifying a next-in-time departure event, and defining an arc between that departure event and the identified next-in-time departure event. That is, each departure in a trip is connected to the next chronological departure on that trip. This is intended to represent remaining on a train (or other transportation means).

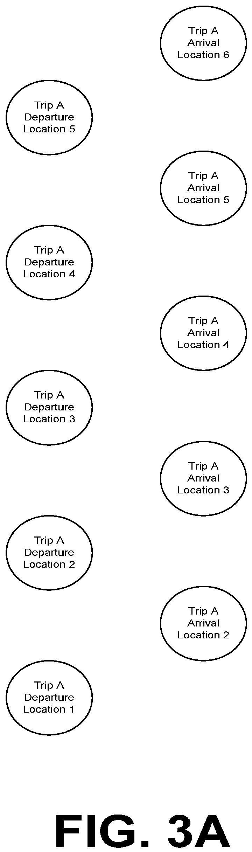

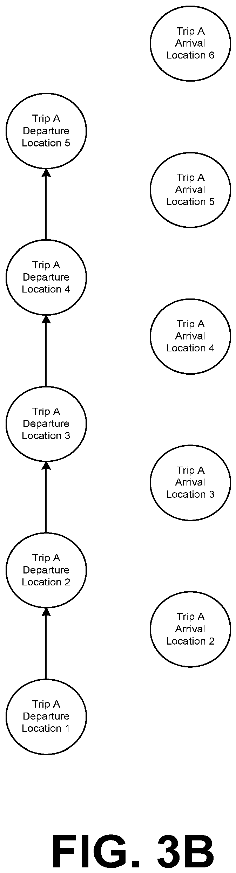

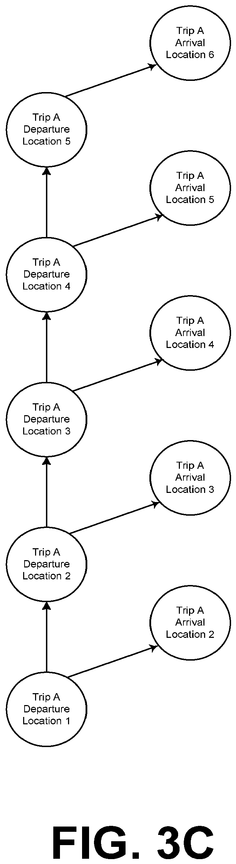

By way of the above arc generation process being performed across all trips, an initial trip-centric graph backbone is defined, with allowance for possibility of continuing or leaving each trip at each scheduled location. This is graphically represented in FIG. 3A to FIG. 3C, which respectively show, for a single example trip: unconnected icons for each event in the example trip; departure-departure connections; and departure-arrival connections.

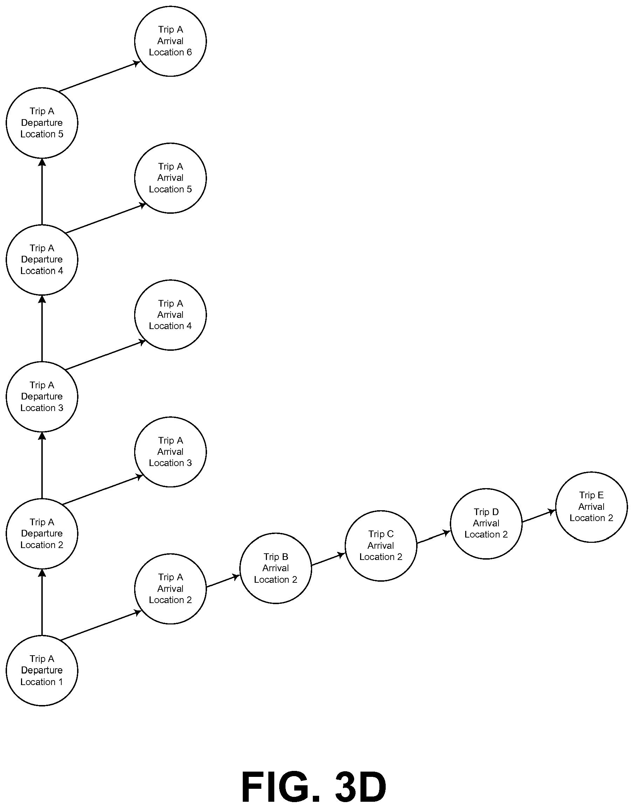

The stop-by-stop arc generation process is preferably performed as follows. The stop-by-stop arc generation process is performed for all defined locations. For each location, the process includes identifying, in the set of events defined by the event generation module, all arrival events associated with that location. Then, for each of those arrival events, the process includes identifying a next-in-time arrival event associated with the location, and defining an arc between the arrival event and the identified next-in-time arrival event. This is diagrammatically shown for one example location in FIG. 3D, with arcs connecting temporally sequential arrival events at that location.

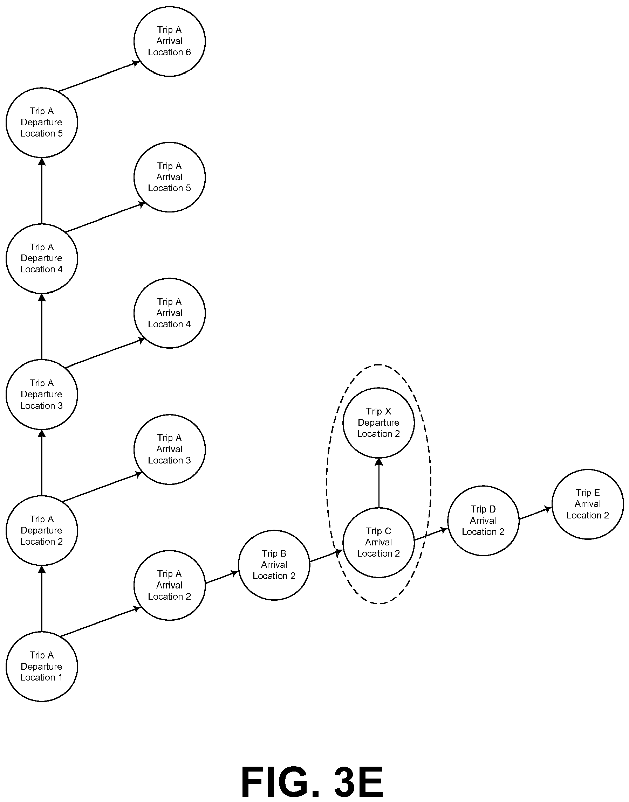

The departure-arrival arc generation process is preferably performed as follows. Again, this process is performed for each individual location, and hence requires identifying, in the set of events defined by the event generation module, all arrival events and departure events associated with each given location. For each given location, the process includes in respect of each of the identified departure events associated with the location, identifying a most-recent-in-time arrival event, and defining an arc between the departure event and the identified most-recent-in-time arrival event. The step of identifying a most-recent-in-time arrival event associated with the location preferably includes applying predefined wait time constraints from the pre-processed transfer times. For example, if a location Lᵢ has a defined pre-processed transfer time of 2 minutes, for a given departure event D_{y} at time 1430, the most-recent-in-time arrival event Aₓ is constrained to arrival events at 1428 or earlier. This accounts for practical transfer times at each location. FIG. 3E shows a practical example of this, in respect of example analysis in respect of a Trip X Departure at Location 2, for which it is found that the most recent arrival (account for transfer times) is the Trip C Arrival at Location 2.

In embodiments where the graph data generation process additionally includes a walk-based arc generation process. In overview, this is performed thereby to define arcs that are representative of walk-based connections between events in the graph.

In one example, walk-based arc generation is based on departure-to-prior-arrival analysis. For each location, referred to here as a start location, the process includes identifying none or more further locations for which data representative of a walking connection is defined for that start location (i.e. in some cases no walking connections are defined). For example, a walking connection is optionally defined in data by way of a combination of a Lᵢ and Lⱼ having a defined walking connection time (which is a value representing a time period, that time period being pre-calculated based on analysis of how long it would take for a "usual" walk between Lᵢ and Lⱼ). If no such value is defined (or alternately an "undefined" value ascribed), there is no walking connection.

Where, for a given start location, there is a non-zero number of further locations having defined walking connections, for each of those further locations the following is performed:
- All departure events at the further location are identified.
- For each departure event at the further location, a most-recent-in time arrival event at the start location is identified, with a time constraint based on (or directly defined by) the predefined walk time. For example, if a combination of location Lᵢ and Lⱼ has a defined pre-processed walk time of 30 minutes, for a given departure event D_{y} at Lᵢ at time 1430, the most-recent-in-time arrival event Aₓ at location Lⱼ is constrained to arrival events at 1400 or earlier.
- An arc is defined between each departure event at the further location and the most-recent-in-time arrival event at the start location.

It will be appreciated that, as this process is performed for all locations as start locations, the process is ultimately reciprocally performed, linking departures at a location Lᵢ to acceptable previous arrivals at a location Lⱼ, and linking departures at a location Lⱼ to acceptable previous arrivals at a location Lᵢ. As with the destination-arrival arc generation process, although the analysis looks backward chronologically through events, the arc moves forward in time through the directed graph.

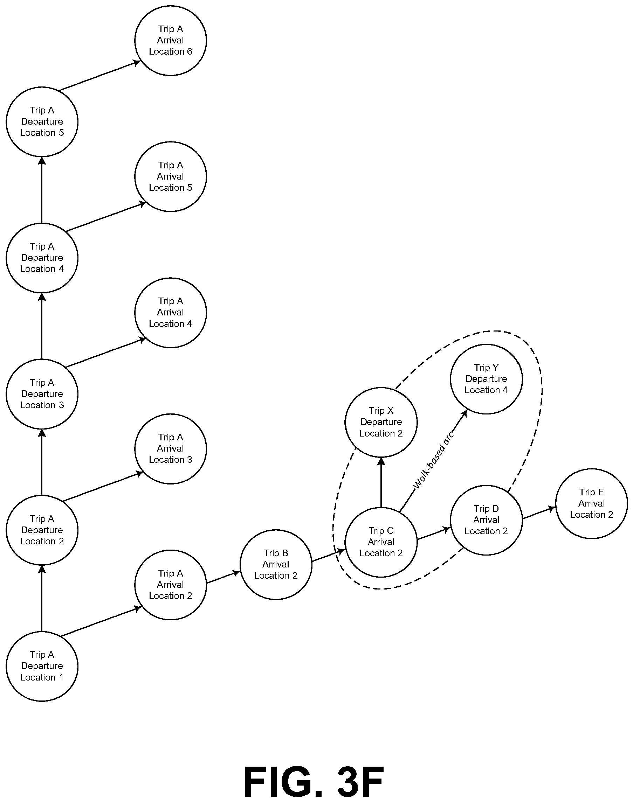

FIG. 3F shows an example walk-based arc, connecting Trip C Arrival at Location 2 to Trip Y Departure a Location 4. In this manner, there is both an arc from Trip C Arrival at Location 2 to Trip X Departure at Location 2 (defined by a departure-arrival arc accounting for pre-processed transfer time at Location 2) and also to Trip Y Departure a Location 4 (defined by a walk-based arc accounting for a walk time between Location 2 and Location 4).

In an alternate embodiment, walk-based arc generation is based on arrival-to-prior-arrival analysis. For each location, referred to again as a start location, the process includes identifying none or more further locations for which data representative of a walking connection is defined for that start location (i.e. in some cases no walking connections are defined). For example, a walking connection is optionally defined in data by way of a combination of a Lᵢ and Lⱼ having a defined walking connection time (which is a value representing a time period, that time period being pre-calculated based on analysis of how long it would take for a "usual" walk between Lᵢ and Lⱼ). If no such value is defined (or alternately an "undefined" value ascribed), there is no walking connection.

Where, for a given start location, there is a non-zero number of further locations having defined walking connections, for each of those further locations the following is performed:
- All arrival events at the further location are identified.
- For each arrival event at the further location, a most-recent-in time arrival event at the start location is identified, with a time constraint based on (or directly defined by) the predefined walk time. For example, if a combination of location Lᵢ and Lⱼ has a defined pre-processed walk time of 30 minutes, for a given arrival event A_{y} at Lᵢ at time 1430, the most-recent-in-time arrival event Aₓ at location Lⱼ is constrained to arrival events at 1400 or earlier.
- An arc is defined between each arrival event at the further location and the most-recent-in-time arrival event at the start location.

Again, although the analysis looks backward chronologically through events, the arc moves forward in time through the directed graph. It will be appreciated that this arrival-arrival method has advantages in the context of defining fewer arcs (as compared with the preceding departure-arrival example), however there are downsides in that there may be some practically viable options missed by the automated analysis (for example where there is no arrival at a location, only a departure, for example where a service is commencing). Further embodiments use modifications and/or combinations of either approach thereby to attain additional incremental efficiency increases.

It will be appreciated that directed graph data defined as above allows for a computer system to solve otherwise complex analysis tasks in the transportation network (such as optimal journeys) in a particularly efficient manner. For example, all paths between an origin location Oᵢ and a destination location Dⱼ within a given time period are able to be rapidly computed to identify optimality conditions. Optimality conditions include time-based optimality (for example shortest in time, earliest arrival, and so on), but may also include other forms of optimality. For example, given that each event is associated with a specific trip, analysis may be conducted to determine optimality by reference to attributes including distance and fare cost.

### Journey Planning based on Graph Data via Event Scanning Process

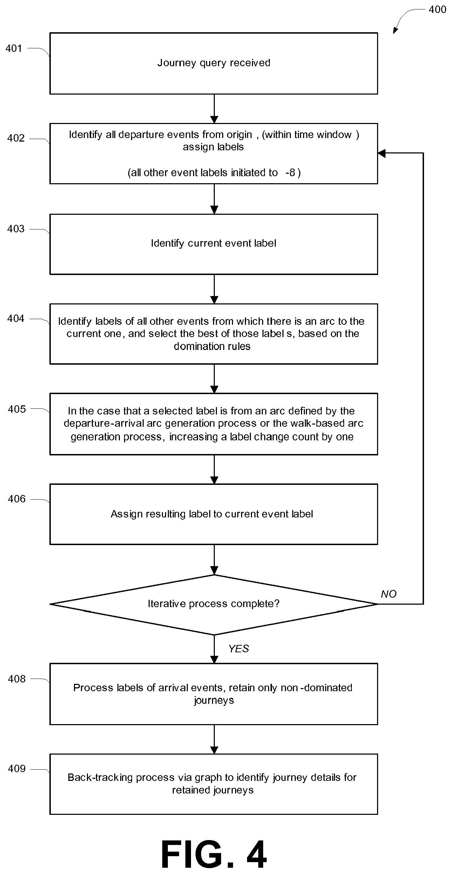

Technology described above relates to a computer system that is configured to define transportation network graph data via a graph data generation process. This graph data is subsequently able to allow efficient solving of computational problems across the network (for example computing "best" journeys, such as where "best" is defined based on earliest arrival). Example technology for performing such analysis is described below, by reference to FIG. 4.

Based on graph data generation pre-processing as described above, all that is required is the resultant directed event graph and data representative of times when the events occur to perform journey planning processes. That is, timetable data is no longer required. In this example, such journey planning is achieved via a graph that provides an event array in chronological order (in further examples other forms of topological order are used). This is referred to herein as an event scanning process.

As shown in FIG. 4, a journey query is received (block 401). A journey query is a set of query data defined by an origin location, a destination location, and a time window. The time window is defined, for the present example, by a departure time window. Processing of the journey query is configured to identify all fastest journeys departing within the time window. In some embodiments, an arrival time window may be used as an alternative and/or additional constraint, and/or to a departure time window.

Journey query processing is configured to identify all "non-dominated journeys". In the present embodiment, rules for determining a domination relationship between a first example journey J₁ and a second example journey J₂ are defined as follows:
- Journey J₁ dominates journey J₂ in the case that:
   (i) J₁ departs the origin location simultaneously to or later than J₂; and
   (ii) J₁ arrives at the destination location simultaneously or earlier than J₂.
- If both arrive and depart simultaneously, J₁ dominates J₂ only if it has same or smaller change count than J₂.
- Of a set of equally good (i.e. mutually dominating) journeys, only one is identified (the others are redundant).

In one embodiment, a search process is configured to scan all events in the time window and assign a label to each one. The label identifies the departure time (from the origin location) and a change count (i.e. changes between trips) for an optimal journey from the origin location to the event. In this embodiment, a "special" lowest-dominance label, -∞ indicates that no such journey exists. Domination, as defined above, can be applied these using labels. Also every other label dominates the "lowest-dominance" label -∞.

An example methodology is to firstly execute a process thereby to identify all events which are departures from the origin location (within the time window), and assign labels to them. They have change count zero, and departure time is the time of the event. All other labels are initialized to -∞. See block 402.

A main search process is then performed thereby to identify optimal labels for all events in the time window. This includes iterating over the full event array (ignoring events outside the time window). For each event, the process includes:
- Identifying a current label (block 403).
- Identifying labels of all other events from which there is an arc to the current one, and selecting the best of those labels, based on the domination rules above (thereby to, upon iteration, trace each event back to the latest departure time from the origin location, and identify a label having a lowest change count). See block 404.
- In the case that a selected label is from an arc defined by the departure-arrival arc generation process or the walk-based arc generation process, increasing a label change count by one. See block 405.
- The resulting label is assigned to the event in question (see block 406).

In this manner, each event eventually adopts a label having a departure time corresponding to the latest departure time from the origin location that provides a journey (as defined in the directed graph) to that event. This defines the shortest journey. Furthermore, the method causes change counts to be aggregated and incremented along arc paths the iterative label determination process.

The method then includes processing labels of all arrival events at the destination. The labels and the events identify the departure and arrival times, and change counts of journeys. These are processed based on the domination rules thereby to discard dominated journeys, and retain non-dominated journeys (block 408). For the non-dominated journeys, a back-tracking process is performed via the directed graph thereby to identify full details of that journey (block 409).

It will be appreciated that the above method provides a particularly efficient method of query processing for a directed graph generated via a graph data generation process as described further above. Furthermore, it will be appreciated that the query processing method may also be used in the case of other data sets that define transportation events as arrivals and departures in a chronological or other logical topographical order.

### Conclusions and Interpretation

It will be appreciated that technology described above provided improved efficiency in utilisation of computing technology in the context of handling transportation network queries (with further application in other applications having similar data constraints).

Unless specifically stated otherwise, as apparent from the following discussions, it is appreciated that throughout the specification discussions utilizing terms such as "processing," "computing," "calculating," "determining", analyzing" or the like, refer to the action and/or processes of a computer or computing system, or similar electronic computing device, that manipulate and/or transform data represented as physical, such as electronic, quantities into other data similarly represented as physical quantities.

In a similar manner, the term "processor" may refer to any device or portion of a device that processes electronic data, e.g., from registers and/or memory to transform that electronic data into other electronic data that, e.g., may be stored in registers and/or memory. A "computer" or a "computing machine" or a "computing platform" may include one or more processors.

The methodologies described herein are, in one embodiment, performable by one or more processors that accept computer-readable (also called machine-readable) code containing a set of instructions that when executed by one or more of the processors carry out at least one of the methods described herein. Any processor capable of executing a set of instructions (sequential or otherwise) that specify actions to be taken are included. Thus, one example is a typical processing system that includes one or more processors. Each processor may include one or more of a CPU, a graphics processing unit (GPU), and a programmable DSP unit. The processing system further may include a memory subsystem including main RAM and/or a static RAM, and/or ROM. A bus subsystem may be included for communicating between the components. The processing system further may be a distributed processing system with processors coupled by a network. If the processing system requires a display, such a display may be included, e.g., a liquid crystal display (LCD) or a cathode ray tube (CRT) display. If manual data entry is required, the processing system also includes an input device such as one or more of an alphanumeric input unit such as a keyboard, a pointing control device such as a mouse, and so forth. The term memory unit as used herein, if clear from the context and unless explicitly stated otherwise, also encompasses a storage system such as a disk drive unit. The processing system in some configurations may include a sound output device, and a network interface device. The memory subsystem thus includes a computer-readable carrier medium that carries computer-readable code (e.g., software) including a set of instructions to cause performing, when executed by one or more processors, one of more of the methods described herein. Note that when the method includes several elements, e.g., several steps, no ordering of such elements is implied, unless specifically stated. The software may reside in the hard disk, or may also reside, completely or at least partially, within the RAM and/or within the processor during execution thereof by the computer system. Thus, the memory and the processor also constitute computer-readable carrier medium carrying computer-readable code.

Furthermore, a computer-readable carrier medium may form, or be included in a computer program product.

In alternative embodiments, the one or more processors operate as a standalone device or may be connected, e.g., networked to other processor(s), in a networked deployment, the one or more processors may operate in the capacity of a server or a user machine in server-user network environment, or as a peer machine in a peer-to-peer or distributed network environment. The one or more processors may form a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine.

In alternative embodiments, additional speedup is obtained by parallel processing which scans several events simultaneously e.g. with a graph processing unit. In such embodiments there is an additional pre-processing module which identifies when one events has to be scanned before another and when events can be scanned in parallel.

Note that while diagrams only show a single processor and a single memory that carries the computer-readable code, those in the art will understand that many of the components described above are included, but not explicitly shown or described in order not to obscure the inventive aspect. For example, while only a single machine is illustrated, the term "machine" shall also be taken to include any collection of machines that individually or jointly execute a set (or multiple sets) of instructions to perform any one or more of the methodologies discussed herein.

Thus, one embodiment of each of the methods described herein is in the form of a computer-readable carrier medium carrying a set of instructions, e.g., a computer program that is for execution on one or more processors, e.g., one or more processors that are part of web server arrangement. Thus, as will be appreciated by those skilled in the art, embodiments of the present invention may be embodied as a method, an apparatus such as a special purpose apparatus, an apparatus such as a data processing system, or a computer-readable carrier medium, e.g., a computer program product. The computer-readable carrier medium carries computer readable code including a set of instructions that when executed on one or more processors cause the processor or processors to implement a method. Accordingly, aspects of the present invention may take the form of a method, an entirely hardware embodiment, an entirely software embodiment or an embodiment combining software and hardware aspects. Furthermore, the present invention may take the form of carrier medium (e.g., a computer program product on a computer-readable storage medium) carrying computer-readable program code embodied in the medium.

The software may further be transmitted or received over a network via a network interface device. While the carrier medium is shown in an exemplary embodiment to be a single medium, the term "carrier medium" should be taken to include a single medium or multiple media (e.g., a centralized or distributed database, and/or associated caches and servers) that store the one or more sets of instructions. The term "carrier medium" shall also be taken to include any medium that is capable of storing, encoding or carrying a set of instructions for execution by one or more of the processors and that cause the one or more processors to perform any one or more of the methodologies of the present invention. A carrier medium may take many forms, including but not limited to, non-volatile media, volatile media, and transmission media. Non-volatile media includes, for example, optical, magnetic disks, and magneto-optical disks. Volatile media includes dynamic memory, such as main memory. Transmission media includes coaxial cables, copper wire and fiber optics, including the wires that comprise a bus subsystem. Transmission media also may also take the form of acoustic or light waves, such as those generated during radio wave and infrared data communications. For example, the term "carrier medium" shall accordingly be taken to included, but not be limited to, solid-state memories, a computer product embodied in optical and magnetic media; a medium bearing a propagated signal detectable by at least one processor of one or more processors and representing a set of instructions that, when executed, implement a method; and a transmission medium in a network bearing a propagated signal detectable by at least one processor of the one or more processors and representing the set of instructions.

It will be understood that the steps of methods discussed are performed in one embodiment by an appropriate processor (or processors) of a processing (i.e., computer) system executing instructions (computer-readable code) stored in storage. It will also be understood that the invention is not limited to any particular implementation or programming technique and that the invention may be implemented using any appropriate techniques for implementing the functionality described herein. The invention is not limited to any particular programming language or operating system.

It should be appreciated that in the above description of exemplary embodiments of the invention, various features of the invention are sometimes grouped together in a single embodiment, FIG., or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the Detailed Description are hereby expressly incorporated into this Detailed Description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those skilled in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

Similarly, it is to be noticed that the term coupled, when used in the claims, should not be interpreted as being limited to direct connections only. The terms "coupled" and "connected," along with their derivatives, may be used. It should be understood that these terms are not intended as synonyms for each other. Thus, the scope of the expression a device A coupled to a device B should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Thus, while there has been described what are believed to be the preferred embodiments of the invention, those skilled in the art will recognize that other and further modifications may be made thereto without departing from the spirit of the invention, and it is intended to claim all such changes and modifications as falling within the scope of the invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A computer system configured to enable efficient processing of queries received from a user, the computer system including:
an input module configured to receive transportation data, the transportation data including:
data representative of a plurality of locations in a transportation network; and
data representative of a plurality of trips in the transportation network, for each trip the data is representative of:
(i) a subset of the plurality of locations;
(ii) for each location in the subset, either or both of an arrival time and a departure time;
an event generation module that is configured to process the received transportation data thereby to define a set of events, wherein the set of events includes:
(i) a plurality of arrival events, each associated with a location and event time; and
(ii) a plurality of departure events, each associated with a location and event time; and;
a graph data generation module that is configured execute an event-based graph generation process in respect of the set of events defined by the event generation module thereby to generate event graph data; and
an output module configured to output the event graph data for analysis, thereby to enable efficient analysis of multiple point-to-point journeys for a given origin and destination within the transportation network.

2. A system according to claim 1 wherein the event-based graph generation process includes:
(i) an in-trip arc generation process;
(ii) a stop-by-stop arc generation process; and
(iii) a departure-arrival arc generation process.

3. A system according to claim 2 wherein the in-trip arc generation process includes, for each trip:
identifying, in the set of events defined by the event generation module a set of in-trip events associated with that trip, a set of in-trip events associated with that trip;
for each departure event in the identified set of in-trip events, identifying a next-in-time arrival event, and defining an arc between that departure event and the identified next-in-time arrival event wherein the arc is a directional arc with a direction from the departure event to the identified next-in-time arrival event; and
for each departure event in the identified set of in-trip events, identifying a next-in-time departure event, and defining an arc between that departure event and the identified next-in-time departure event wherein the arc is a directional arc with a direction from the departure event to the identified next-in-time departure event.

4. A system according to claim 3 wherein the stop-by-stop arc generation process includes:
for each location in the plurality of locations, identifying, in the set of events defined by the event generation module, all arrival events associated with the location;
for each location in the plurality of locations, in respect of each of the identified arrival events associated with the location, identifying a next-in-time arrival event associated with the location, and defining an arc between the arrival event and the identified next-in-time arrival event.

5. A system according to claim 4 wherein the departure-arrival arc generation process includes:
for each location in the plurality of locations, identifying, in the set of events defined by the event generation module, all arrival events and departure events associated with the location;
for each location in the plurality of locations, in respect of each of the identified departure events associated with the location, identifying a most-recent-in-time arrival event, and defining an arc between the arrival event and the identified most-recent-in-time arrival event.

6. A system according to claim 5 wherein identifying a most-recent-in-time arrival event associated with the location includes applying predefined wait time constraints.

7. A system according to claim 6 wherein the graph data generation process additionally includes a walk-based arc generation process, wherein the walk-based arc generation process includes:
for each location in the plurality of locations, identifying none or more further locations for which data representative of a walking connection is defined; and
for each location in the plurality of locations for which one or more further locations for which data representative of a walking connection is defined, identifying, in the set of events defined by the event generation module associated with the location, all departure events;
for each identified departure event, identifying a most-recent-in-time arrival event at the or each further location beyond a predefined walk time period defined for a combination of the location and the further location, and defining an arc between the departure event and the identified most-recent-in-time arrival event beyond the predefined walk time period.

8. A system according to any preceding claim including a graph generation coordination module that is configured to control the input module, event generation module, graph data generation module and output module thereby to cause generation and outputting of updated graph data in response to predefined stimuli.

9. A system according to claim 8 wherein the predefined stimuli includes: elapsing of a predetermined time period, a time-based trigger, and input representative of a change in the transportation data

10. A system according to any preceding claim including an event scanning module that is configured to analyse the event graph data in response to a received query.

11. A system according to claim 10, when appended to any one of claims 2 to 7, wherein the event scanning module is configured to:
(i) receive a journey query including data defining an origin location, a destination location, and a time window;
(ii) execute a process thereby to identify all events inside the time window that are departure events from the origin location, and:
(a) assign to each identified a label defined by the departure time and a change count of zero; and
(b) assign to all other event the a lowest-dominance label;
(iii) executing an iterative process over all events in the time window in topological order thereby to, for each given event:
(a) identify a current label for the given event
(b) identify labels of all other events from which there is an arc to the given event;
(c) select a best label based on a set of the domination rules;
(d) in the case that a selected label is from an arc defined by the departure-arrival arc generation process or the walk-based arc generation process, increasing the change count by one;
(e) assigning the label to the given event;
(iv) processing labels of all arrival events at the destination based on domination rules thereby to discard dominated journeys, and retain non-dominated journeys.

12. A system according to claim 11 including, for the non-dominated journeys, performing a back-tracking process via the directed graph thereby to identify full details of that journey.

13. A system according to claim 11 or claim 12 wherein the domination rules are configured such that:
• a journey J₁ dominates a journey J₂ in the case that:
(i) J₁ departs the origin location simultaneously to or later than J₂; and
(ii) J₁ arrives at the destination location simultaneously or earlier than J₂; and
• if J₁ and J₂ both arrive and depart simultaneously, J₁ dominates J₂ only if it has same or smaller change count than J₂.

14. A system configured to process a journey query in respect of a set of transportation data defined by a set of events defined in a directed graph, wherein the set of events includes:
(i) a plurality of arrival events, each associated with a location and event time; and
(ii) a plurality of departure events, each associated with a location and event time; and;
wherein the directed graph includes arcs between events defined based on a defined schema, including one or more arcs representative of transportation changes;
the system including an event scanning module is configured to:
(i) receive a journey query including data defining an origin location, a destination location, and a time window;
(ii) execute a process thereby to identify all events inside the time window that are departure events from the origin location, and:
(a) assign to each identified a label defined by the departure time and a change count of zero; and
(b) assign to all other event the a lowest-dominance label;
(iii) executing an iterative process over all events in the time window in topological order thereby to, for each given event:
(a) identify a current label for the given event
(b) identify labels of all other events from which there is an arc to the given event;
(c) select a best label based on a set of the domination rules;
(d) in the case that a selected label is from an arc representative of a transportation change, increasing the change count by one;
(e) assigning the label to the given event;
(iv) processing labels of all arrival events at the destination based on domination rules thereby to discard dominated journeys, and retain non-dominated journeys.

15. A system according to claim 14 wherein the domination rules are configured such that:
• a journey J₁ dominates a journey J₂ in the case that:
(iii) J₁ departs the origin location simultaneously to or later than J₂; and
(iv) J₁ arrives at the destination location simultaneously or earlier than J₂; and
• if J₁ and J₂ both arrive and depart simultaneously, J₁ dominates J₂ only if it has same or smaller change count than J₂.
